Europäisches Patentamt

European Patent Office    (11) Numéro de publication: **0 150 639**
                                                        **A1**
Office européen des brevets

(19)

(12)              **DEMANDE DE BREVET EUROPEEN**

(21) Numéro de dépôt: 84402409.1

(22) Date de dépôt: 26.11.84

(51) Int. Cl.⁴: **F 41 H 5/04**, F 41 H 1/02,
     B 32 B 7/00, B 32 B 15/04,
     B 32 B 15/20

(30) Priorité: **12.01.84 FR 8400398**

(43) Date de publication de la demande: **07.08.85**
     **Bulletin 85/32**

(84) Etats contractants désignés: **AT BE CH DE GB IT LI LU NL SE**

(71) Demandeur: **FONDERIE ALCOA-MG S.A., Rue de Chamrousse, F-38170 Seyssinet (FR)**

(72) Inventeur: **Huet, Roger, 12 Place Paul Mistral, F-38000 Grenoble (FR)**
    Inventeur: **Perrier, Philippe, 2 Allée de Bérivière, F-38204 Meylan (FR)**

(74) Mandataire: **Hirsch, Marc-Roger, 34 rue de Bassano, F-75008 Paris (FR)**

(54) Eléments de blindage, et blindages souples constitués à partir de tels éléments, notamment gilets pare-balles.

(57) Elément de blindage contre les projectiles formé d'un noyau en céramique enrobé dans une enveloppe métallique obtenue par moulage autour dudit noyau d'un alliage résilient et à bonne efficacité antibalistique.

L'enveloppe 2 est fortement précontrainte au moulage autour du carreau de céramique 1 afin de s'opposer à la fragmentation de ce carreau sous le choc d'un projectile.

Application à la réalisation de blindages souples ou de parties de blindage souple par assemblage articulé d'éléments de blindage juxtaposés.

0150639

ELEMENTS DE BLINDAGE, ET BLINDAGES SOUPLES CONSTITUES
A PARTIR DE TELS ELEMENTS, NOTAMMENT GILETS PARE-BALLES

La présente invention se rapporte à des éléments de blindage contre les balles ou autres projectiles et elle vise aussi des blindages souples constitués à partir de tels éléments, en particulier des gilets pare-balles.

Le brevet français 7 807 538 publié sous le n° 2 419 498 propose un procédé pour la réalisation de pièces métalliques composites, comportant des inserts en matière céramique noyés dans une coquille métallique et qui ont été disposés et positionnés de façon régulière dans le moule pour assurer une efficacité balistique et ménager entre eux des intervalles de passage du métal d'enrobage.

Les éléments de blindage faisant l'objet de la présente invention sont obtenus par la mise en oeuvre de ce procédé, mais ils sont destinés principalement à réaliser des surfaces de blindage souples et présentant une résistance élevée à un impact pénétrant tel que celui d'une balle à ogive en acier ou autre matériau dur d'impact. Les éléments de blindage ainsi réalisés se révèlent particulièrement légers et résistants aux impacts.

L'élément de blindage antiprojectiles selon l'invention formé d'un noyau en céramique enrobé dans une enveloppe métallique obtenue par coulée autour dudit noyau d'un alliage résilient et à bonne efficacité antibalistique, est caractérisé en ce que le noyau est un carreau de céramique sensiblement plan et en ce que l'enveloppe assure une précontrainte en se refroidissant autour du carreau de céramique afin de s'opposer à la fragmentation de ce carreau sous le choc d'un projectile.

Cet élément est, en outre, caractérisé en ce que l'enveloppe présente au moins sur ses faces principales sensiblement planes une épaisseur sensiblement uniforme. L'enveloppe comporte des oreilles d'articulation à d'autres éléments semblables venues de moulages avec ladite enveloppe et les oreilles sont de préférence percées d'alésages, s'étendant parallèlement aux bords du carreau, pour le passage d'organes d'articulation aux autres éléments.

L'enveloppe métallique est, de préférence, en un alliage présentant de bonnes qualités balistiques de freinage du projectile et de ses éclats après l'impact sur le carreau de céramique, ou bien en un alliage présentant une bonne résistance à des flammes agressives telles que celles d'un lance-flamme, d'un chalumeau ou d'une charge creuse.

La juxtaposition et l'assemblage de ces éléments permettent la réalisation de blindages souples ou de parties de blindage souple particulièrement légers et efficaces et constitués par la juxtaposition d'éléments identiques selon l'invention de forme générale polygonale et l'articulation de ces éléments entre eux selon la ligne de contact des polygones jointifs constitués par ces éléments assemblés.

Les éléments sont alors juxtaposés et assemblés entre eux par engagement réciproque des oreilles de deux éléments contigus, suivi de l'engagement de broches ou de tiges de fixation à haute résistance dans des alésages ménagés à l'intérieur de ces oreilles parallèlement au bord de l'élément.

Les caractéristiques et avantages de l'invention ressortiront d'ailleurs mieux de la description suivante, donnée uniquement à titre d'exemple, en référence aux dessins annexés dans lesquels:

- la figure 1 est une vue en perspective avec arrachement partiel d'une forme de réalisation de l'élément de blindage selon l'invention;

- la figure 2 est une vue en plan, à plus petite échelle, de l'élément de la figure 1;

- la figure 3 est une vue de côté de ce même élément;

- la figure 4 montre l'assemblage de quatre des éléments précédents constituant une partie d'un blindage souple selon l'invention;

- la figure 5 est une vue de détail, en coupe, montrant l'assemblage des deux éléments selon l'invention;

- la figure 6 est un schéma illustrant les possibilités d'articulation des divers éléments entre eux;

- les figures 7, 8 et 9 sont des figures respectivement analogues aux

0150639

3

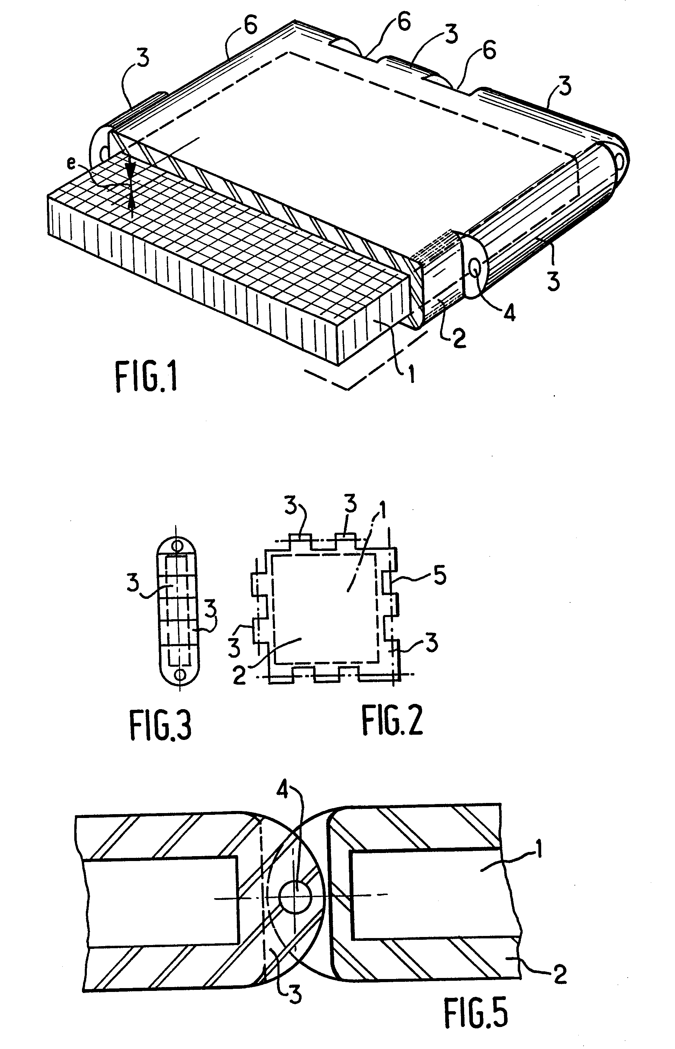

figures 2 à 4, pour une variante de réalisation de l'élément de blindage selon l'invention.

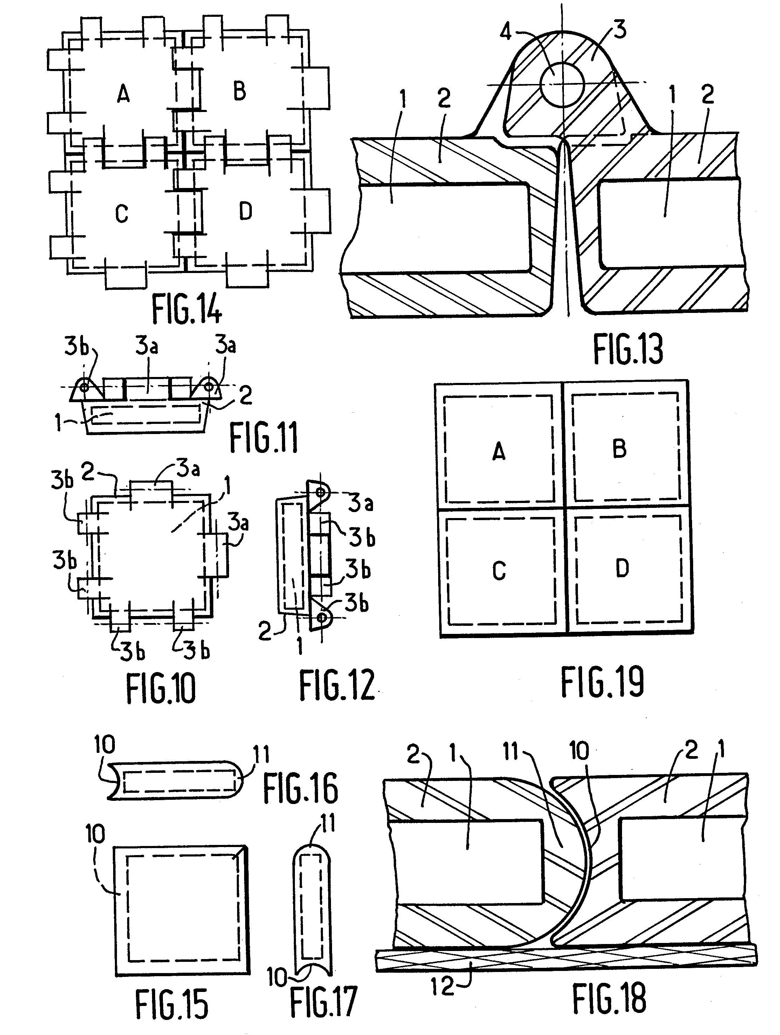

- les figures 10, 11, 12 illustrent une autre forme de réalisation de l'élément de blindage selon l'invention;

- la figure 13 montre, en détail et en coupe, l'assemblage de deux des éléments précédents;

- la figure 14 montre l'assemblage de quatre éléments selon les figures 10 à 13;

- les figures 15 à 19 sont des figures respectivement analogues aux figures 10 à 14 pour une autre variante de réalisation de l'élément de blindage selon l'invention;

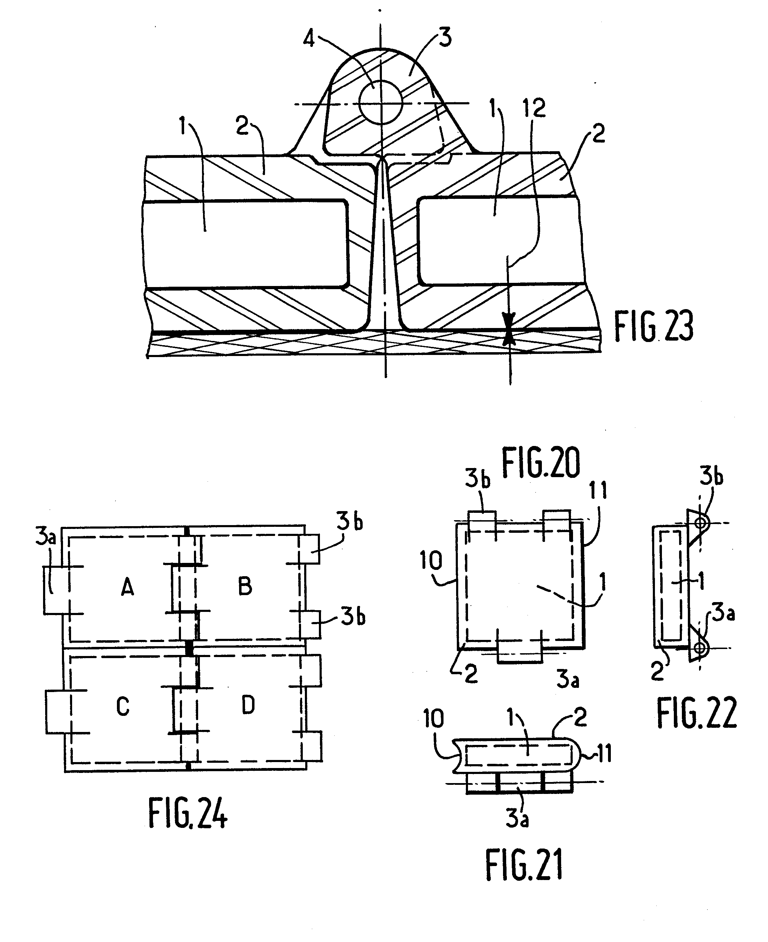

- les figures 20 à 24 sont aussi des figures respectivement analogues aux figures 10 à 14 pour une variante différente de l'élément de blindage selon l'invention.

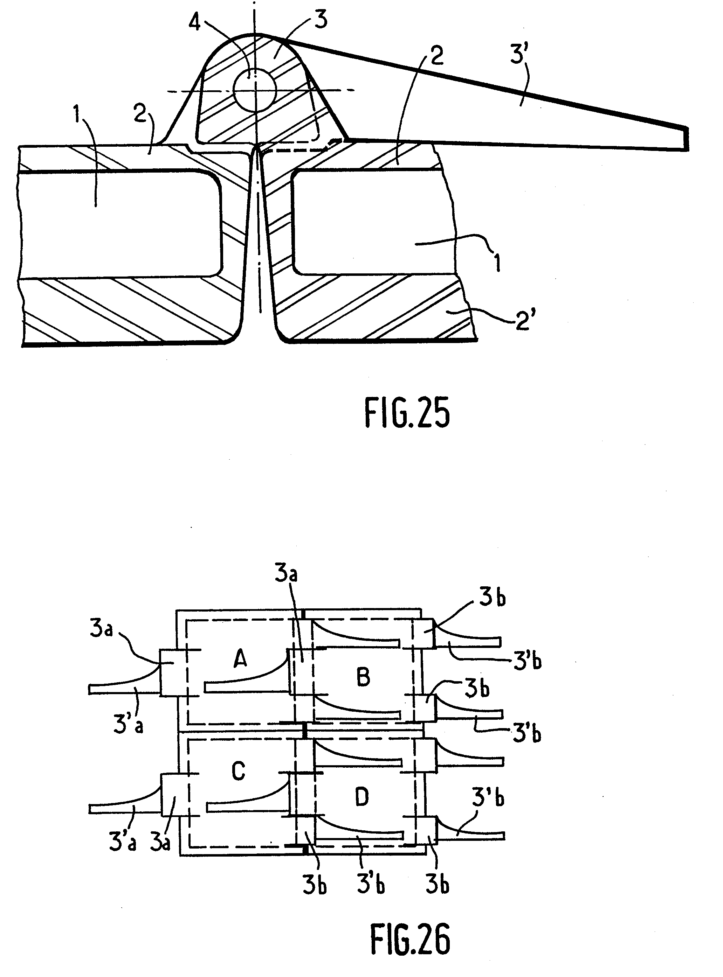

- les figures 25 et 26 correspondent à un mode de réalisation analogue à celui des figures 20 à 24, à la différence toutefois que les oreilles d'assemblage comportent des nervures de renforcement.

Dans la forme de réalisation représentée à la figure 1, l'élément de blindage selon l'invention comprend un noyau 1 constitué par un carreau de céramique, de qualité dite balistique, c'est-à-dire apte à résister à un impact de projectile et à briser celui-ci. Ce carreau est, par exemple, de forme carrée avec des dimensions de 50 mm x 50 mm pour une épaisseur de 4 à 8 mm selon les niveaux de protection requis.

Ce noyau 1 est enrobé de toutes parts dans une enveloppe 2 en un alliage d'aluminium, également de qualité balistique. L'épaisseur $e$ de cette enveloppe également fonction du niveau de protection requis, peut, par exemple, être comprise entre 1 et 3 mm.

Cette enveloppe 2 est obtenue par coulée de l'alliage d'aluminium autour du noyau 1 formant insert, de telle manière que l'épaisseur de l'enveloppe soit sensiblement uniforme autour de l'insert, en particulier sur les deux faces principales du carreau de céramique.

De plus, au cours du refroidissement qui suit la coulée de l'alliage, le retrait linéaire qui se produit au sein de l'alliage entraîne la mise sous contrainte du carreau de céramique. Cette contrainte permet une cohésion très étroite entre la surface externe de la céramique et la surface interne de l'enveloppe en alliage d'aluminium.

Comme on le verra plus loin, ce contact étroit de l'enveloppe 2 avec le noyau 1 améliore considérablement les qualités de résistance du carreau céramique à l'impact d'un projectile.

0150639

4

Sur chacune de ses faces latérales, l'élément de blindage selon l'invention est muni d'oreilles 3, lesdites oreilles ménageant entre elles des encoches 6. Dans ces oreilles 3 sont pratiquées des alésages 4 s'étendant parallèlement aux faces latérales de l'élément et adaptés à recevoir des organes de fixation 5 des éléments entre eux, tels que des vis ou tiges en acier ou autre matériau à haute résistance.

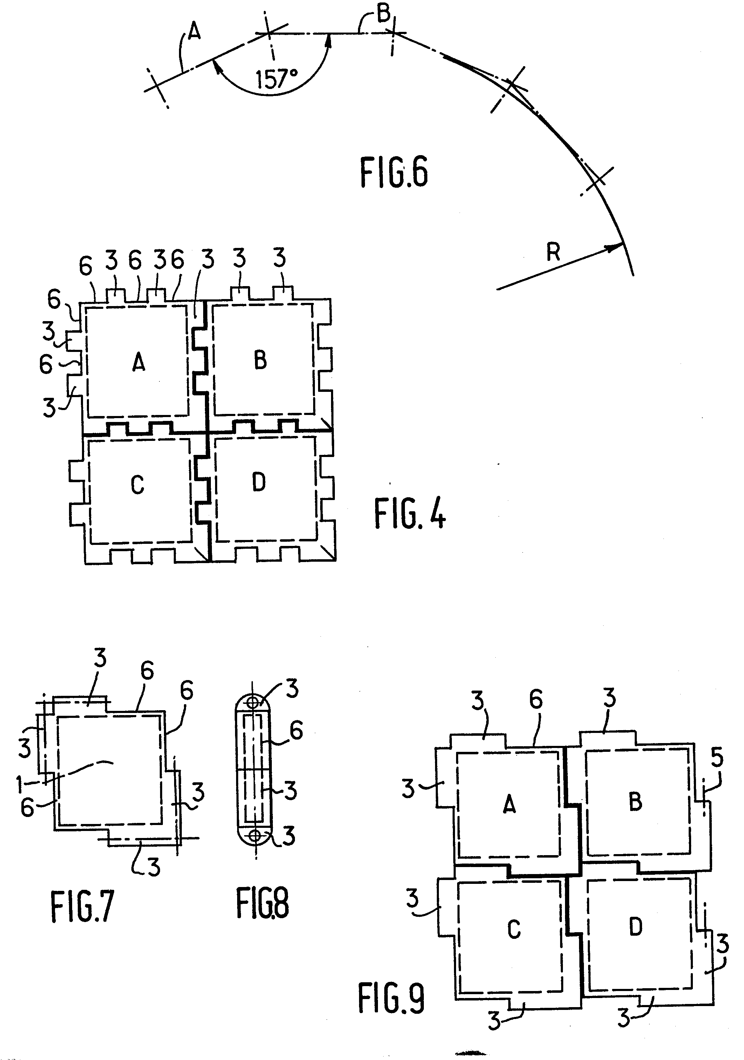

Les oreilles 3 et les encoches 6 qu'elles ménagent entre elles sur les bords des éléments de blindage, sont disposées de manière à être complémentaires d'un élément à un autre et à permettre l'imbrication desdits éléments entre eux comme le montre la figure 4, pour quatre de ces éléments A, B, C, D. Sur deux côtés adjacents, un élément possède trois oreilles que séparent deux encoches et sur les deux autres côtés adjacents, deux oreilles entre trois encoches.

Les alésages 4 des éléments adjacents viennent en alignement les uns avec les autres (figure 5) et il est possible d'y introduire les organes de fixation 5 mentionnés précédemment. On choisit un axe d'articulation très résistant et on ménage entre les oreilles 3 en place dans leurs encoches, un jeu de quelques dixièmes de mm pour faciliter les déplacements angulaires des éléments entre eux, de manière à constituer une plaque de blindage relativement souple.

La figure 6 illustre un exemple de réalisation, dans lequel deux éléments adjacents A et B peuvent faire entre eux un angle de 150 à 157° par exemple et la plaque souple de blindage s'enroule ainsi autour d'un cylindre ayant au minimum un rayon R de 73,7 mm.

Pour la constitution d'un blindage de grande surface avec les éléments selon l'invention, on forme sur une largeur d'élément une rangée de ces éléments de la longueur désirée, les axes d'articulation des éléments de cette rangée étant placés de telle sorte qu'une de leurs extrémités vienne en butée contre les axes d'articulation perpendiculaires aux précédents, qui assembleront ladite rangée à une autre constituée de la même manière.

Il est possible d'obtenir ainsi des blindages souples, particulièrement légers, et bien adaptés notamment à la confection de gilets pare-balles ou autres vêtements de protection.

La protection assurée est notablement accrue par la création d'une contrainte de compression élevée sur les carreaux de céramique lors de la coulée de l'enveloppe et de son refroidissement comme on l'a déjà mentionné.

L'enveloppe moulée en alliage d'aluminium de qualité balistique empêche l'éclatement du carreau de céramique lorsqu'une balle ou un autre projectile le frappe et interdit la fragmentation du carreau en céramique dure, en empêchant que ces fragments et les éclats du projectile ne s'éparpillent à l'extérieur avec une vitesse dangereuse, du fait de la quantité d'énergie cinétique transmise par le projectile. On obtient ainsi une très grande résistance contre la pénétration du projectile et cette résistance est accrue par la grande résilience de l'alliage d'aluminium et le fait que cet alliage colle en quelque sorte au(x) projectile(s) et le ou les freine(nt) selon les qualités antibalistiques bien connues des alliages d'aluminium tels que les alliages ARMAIR et AVIOR (marques déposées au nom de la demanderesse).

Les figures 7 à 9 illustrent une variante de réalisation de l'élément de blindage selon l'invention, les mêmes références et les mêmes modes d'assemblage que précédemment étant utilisés, pour les mêmes constituants.

Dans cette forme de réalisation, chaque élément ne comporte qu'une seule oreille 3 sur chacune de ses faces latérales.

De ce fait, il est nécessaire d'utiliser des axes d'assemblage 5 plus résistants puisqu'ils sont soumis à des efforts de cisaillement plus importants. Cependant, les oreilles 3 de cette variante étant relativement plus larges, sont aussi plus résistantes que dans la première forme de réalisation et permettent une meilleure tenue de l'alliage d'aluminium.

Une autre variante de réalisation de l'élément de blindage selon l'invention est illustrée par les figures 10 à 14; comme précédemment, les mêmes références sont utilisées pour des constituants analogues à ceux des éléments précédemment décrits.

Chaque élément comporte sur deux faces latérales adjacents une seule oreille 3a et, sur les deux autres faces latérales, deux oreilles 3b. Chacune de ces oreilles comporte un alésage 4 pour le passage d'axes d'assemblage et, lors de l'assemblage des éléments entre eux, par exemple l'assemblage de quatre éléments A, B, C, D, comme représenté à la figure 14, une oreille unique 3a de l'une des plaques vient se loger entre les deux oreilles 3b de la plaque adjacente.

Alors que dans les éléments de blindage précédemment décrits, les oreilles d'assemblage 3 sont dans le prolongement des faces des plaques qui les portent, dans cette nouvelle variante, lesdites oreilles 3a et 3b sont en saillie par rapport à l'une des faces de ces plaques, l'axe d'assemblage et d'articulation logé dans les alésages 4 étant ainsi disposé à une certaine distance au-dessus de cette face, vers l'extérieur de l'élément. On obtient ainsi une plus grande latitude d'articulation (figure 13).

Une forme de réalisation différente de l'élément de blindage est représentée aux figures 15 à 19. Comme précédemment, chaque élément comporte un noyau 1 enrobé de toutes parts dans une enveloppe 2, en alliage d'aluminium de qualité balistique, cet enrobage étant obtenu par coulée comme déjà indiqué.

Pour l'articulation des éléments de blindage entre eux pour constituer des plaques, chaque élément présente sur deux de ses faces latérales adjacentes un profil concave ménageant un évidement 10 de section semi-circulaire, et sur ses deux autres faces latérales un profil convexe 11 complémentaire du précédent. L'emboîtement du profil 11 dans le profil 10 forme une articulation (figure 18) autour de laquelle peuvent osciller les éléments ainsi rapprochés.

Pour le maintien des éléments, ces derniers sont réunis au moyen d'une nappe de tissu 12 collée sur une face principale desdits éléments (figure 18). On choisit une nappe de texture suffisamment élastique pour permettre un débattement relatif des éléments entre eux.

La variante d'élément selon l'invention des figures 20 à 24 est intermédiaire entre les deux formes précédentes.

Chaque élément comporte, en effet, sur deux faces latérales opposées, une oreille unique centrale 3a et deux oreilles distinctes 3b, et sur les deux autres faces latérales, un profil concave 10 et un profil convexe complémentaire 11.

Pour la constitution d'une plaque à partir de ces éléments, on réalise des rangées d'éléments assemblés par leurs oreilles 3a, 3b, au moyen d'axes traversant les alésages de ces oreilles, tous les profils concaves 10 et tous les profils convexes 11 des éléments étant situés d'un même côté de la rangée, respectivement.

Des rangées successives d'éléments sont emboîtées les unes dans les autres par leurs profils complémentaires, la cohésion de l'ensemble étant obtenu par collage des éléments sur une nappe 12, comme dans le cas précédent.

Le mode de réalisation tel que représenté sur les figures 25 et 26 correspond au mode de réalisation des figures 20 à 24 modifié de sorte que:

- l'épaisseur de la couche d'aluminium dont est revêtue la face frontale 2 est inférieure à l'épaisseur de la couche d'aluminium de la face arrière 2';

- les oreilles d'assemblage 3 comportant des nervures de renforcement 3', les oreilles centrales 3a et les oreilles 3b se prolongeant par des nervures de renforcement respectivement 3'a et 3'b constituant une partie venue de fonderie aves lesdites oreilles.

Par ailleurs, la nappe de tissu 12 n'est pas utilisée dans ce mode de réalisation bien qu'elle puisse être ajoutée en cas d'utilisation des éléments de blindage dans un gilet pare-balles.

Bien entendu, les formes de réalisation décrites et représentées, ne sont données que comme exemples, et l'élément de blindage selon l'invention peut faire l'objet de nombreuses autres variantes, portant notamment sur la forme du carreau de céramique utilisé et, par conséquent de l'élément qui l'enrobe.

On peut réaliser ainsi des éléments de blindage rectangulaires ou hexagonaux qui s'assemblent entre eux en réseau.

L'élément de blindage selon l'invention peut être réalisé avec des dimensions plus importantes, en particulier pour l'épaisseur du carreau de céramique, que celles qui ont été mentionnées. Le blindage selon l'invention peut être utilisé pour protéger des matériels tels que des véhicules contre des projectiles autre que les balles perforantes et tels que des charges creuses ou des obus.

L'élément de blindage peut être assemblé pour réaliser des formes de protection plus complexes telles que celles requises pour les casques militaires ou les casques de motocyclistes où l'impact éventuel est le plus souvent déclenché par le porteur du casque. L'élément de blindage peut servir en même temps à protéger contre les flammes, notamment les flammes agressives telles que celles des lance-flammes, des chalumeaux ou des charges creuses.

Il est également possible d'assembler entre eux des éléments de blindage de dimensions différentes. Ainsi, un gilet pare-balles réalisé selon l'invention peut être constitué d'éléments de blindage de petite

8

0150639

dimension dans les zones à forte courbure telles que celles enveloppant les membres et d'éléments plus larges et/ou plus grands dans les zones assurant la protection de face ou de dos.

L'assemblage d'éléments de grande dimension (dont les carreaux de céramique et/ou l'alliage d'enrobage peuvent par ailleurs présenter une plus grande épaisseur à titre de compensation) donne un blindage sensiblement aussi efficace et dont le coût par unité de surface est bien moindre que celui des zones à forte courbure. A la limite, il est possible d'utiliser les parties de blindage selon l'invention pour raccorder entre elles des plaques de blindage en acier de grande dimension pour réaliser par exemple la carapace d'un véhicule.

REVENDICATIONS

1.- Elément de blindage contre les projectiles formé d'un noyau en céramique enrobé dans une enveloppe métallique obtenue par moulage autour dudit noyau d'un alliage résilient et à bonne efficacité antibalistique tel qu'un alliage d'aluminium, caractérisé en ce que le noyau (1) est un carreau de céramique sensiblement plan et en ce que l'enveloppe (2) est coulée autour de ce noyau de façon telle qu'elle assure une précontrainte élevée autour de celui-ci pour s'opposer à la fragmentation du noyau sous le choc d'un projectile, ladite enveloppe présentant, au moins sur ses faces principales sensiblement planes, une épaisseur (e) sensiblement uniforme et comportant sur ses faces latérales des oreilles (3) d'articulation avec d'autres éléments semblables, venues de moulage avec ladite enveloppe.

2.- Elément de blindage selon la revendication 1, caractérisé en ce que l'enveloppe comporte sur au moins deux de ses faces latérales des oreilles (3) d'articulation à d'autres éléments semblables, venues de moulage avec ladite enveloppe.

3.- Elément de blindage selon la revendication 2, caractérisé en ce que les oreilles (3) sont percées d'alésages (4), s'étendant parallèlement aux bords du carreau (1), pour le passage d'organes d'articulation (5) aux autres éléments.

4.- Elément de blindage selon l'une des revendications 2 ou 3, caractérisé en ce que les oreilles (3) sont dans le prolongement des faces principales de l'enveloppe.

5.- Elément de blindage selon l'une des revendications 2 ou 3, caractérisé en ce que les oreilles (3) sont en saillie d'un même côté par rapport à l'une des faces principales de l'enveloppe.

6.- Elément de blindage selon l'une des revendciations 1 à 5, caractérisé en ce que les organes d'articulation présentent sur au moins deux faces latérales opposées un profil concave (10) de section semi-circulaire et un profil convexe (11) complémentaire du précédent, pour emboîtement avec des éléments semblables.

7.- Elément de blindage selon l'une des revendications 1 à 6, caractérisé en ce que l'alliage résilient est un alliage présentant de bonnes qualités balistiques de freinage du projectile et de ses éclats après l'impact sur le carreau de céramique.

8.- Elément de blindage selon l'une des revendications 1 à 7, caractérisé en ce que l'alliage résilient est un alliage présentant une bonne résistance à des flammes agressives telles que celles d'un lance flammes, d'un chalumeau ou d'une charge creuse, notamment pour application coffres-forts.

9.- Blindage souple ou partie de blindage souple, caractérisé en ce qu'il est constitué par la juxtaposition d'éléments identiques (A, B, C, D) de forme générale polygonale selon l'une des revendications 1 à 4 et l'articulation de ces éléments entre eux selon la ligne de contact des polygones jointifs constitués par ces éléments assemblés.

10.- Blindage souple ou partie de blindage souple selon la revendication 9, caractérisé en ce que les éléments sont juxtaposés et assemblés entre eux par engagement réciproque des oreilles (3) de deux éléments contigus, suivi de l'engagement de broches ou de tiges de fixation (5) à haute résistance dans des alésages (4) ménagés à l'intérieur de ces oreilles (3) parallèlement au bord de l'élément.

11.- Blindage souple ou partie de blindage souple, selon la revendication 9, caractérisé en ce que les éléments sont juxtaposés et articulés entre eux par emboîtement des profils complémentaires concave et convexe de leurs faces latérales adjacentes.

12.- Blindage souple ou partie de blindage souple, selon l'une quelconque des revendications 9 à 11, caractérisé en ce que les éléments juxtaposés sont collés par une de leur face sur une nappe de tissu (12).

13.- Blindage souple ou partie de blindage souple selon l'une quelconque des revendications 9 à 12, caractérisé en ce que deux éléments identiques contigus peuvent se débattre relativement l'un à l'autre par rapport à leur position coplanaire pour former en position de butée relative un angle compris sensiblement entre 150 à 157°.

0150639

FIG.1

FIG.3

FIG.2

FIG.5

0150639

FIG.6

FIG.4

FIG.7

FIG.8

FIG.9

FIG.14

FIG.13

FIG.11

FIG.10

FIG.12

FIG.19

FIG.16

FIG.15

FIG.17

FIG.18

FIG. 23

FIG. 20

FIG. 24

FIG. 21

FIG. 22

0150639

FIG.25

FIG.26

Office européen
des brevets

**RAPPORT DE RECHERCHE EUROPEENNE**

Numéro de la demande

EP 84 40 2409

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 526 535 (PEQUIGNOT)<br>* Page 1, lignes 1-13; page 2, lignes 13-30; page 4, lignes 19-23; page 7, lignes 35-37; figures 1-14 * | 1-13 | F 41 H 5/04<br>F 41 H 1/02<br>B 32 B 7/00<br>B 32 B 15/04<br>B 32 B 15/20 |
| Y | FR-A-1 566 448 (FELDMÜHLE)<br>* Page 2, colonne de gauche, paragraphes 3-5; page 2, colonne de droite, paragraphe 7; page 3, colonne de droite, paragraphes 1-2; figures 1-3 * | 1-13 | |
| Y | US-A-2 373 726 (WATTS)<br>* En entier * | 1-13 | |
| Y | FR-A- 496 875 (SUDERLOCK)<br>* En entier * | 5 | |
| A | | 1,2,3, 4,9,10 | DOMAINES TECHNIQUES RECHERCHES (Int. Cl.4)<br><br>F 41 H |
| Y | GB-A-1 260 111 (ROLLS-ROYCE)<br>* Page 2, lignes 122-126; page 3, lignes 1-3; figure 8 * | 6,11 | |
| Y | US-A-3 616 115 (KLIMMEK)<br>* Colonne 1, lignes 56-75; colonne 2, lignes 1-53; colonne 3, lignes 17-27; figures 1-3 * | 12 | |

--- -/-

Le présent rapport de recherche a été établi pour toutes les revendications

| Lieu de la recherche | Date d'achèvement de la recherche | Examinateur |
|---|---|---|
| LA HAYE | 26-02-1985 | VAN DER PLAS J.M. |

**RAPPORT DE RECHERCHE EUROPEENNE**

Office européen
des brevets

| DOCUMENTS CONSIDERES COMME PERTINENTS | | | Page 2 |
|---|---|---|---|

| Catégorie | Citation du document avec indication, en cas de besoin, des parties pertinentes | Revendication concernée | CLASSEMENT DE LA DEMANDE (Int. Cl.4) |
|---|---|---|---|
| A | --- | 1,7 | |
| A | FR-A-2 137 195 (FELDMÜHLE) <br> * Page 1, lignes 31-40; page 2, lignes 1-14; page 4, lignes 5-17; figure * <br> --- | 1,7 | |
| A | US-A-1 532 362 (BAILEY) <br> --- | | |
| A | DE-C- 595 979 (GRANOWSKY) <br> --- | | |
| A | FR-A-2 492 423 (BELLINO) <br> --- <br> ----- | | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 26-02-1985 | VAN DER PLAS J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82